# EUROPEAN PATENT SPECIFICATION

(11) **EP 3 098 206 B1**
(45) Date of publication and mention of the grant of the patent: **12.07.2017**
(21) Application number: 16168894.0
(22) Date of filing: 10.05.2016
(51) Int. Cl.: C03C 3/093, C03C 4/00

(54) **CRYSTAL GLASS**
KRISTALLGLAS
VERRE DE CRISTAUX

(30) Priority: 29.05.2015 CN 201510288607
(43) Date of publication of application: 30.11.2016
(73) Proprietor: Cdgm Glass Co., Ltd., Chengdu, Sichuan 610100 (CN)
(72) Inventor: MAO, Lulu, 610100 Chengdu (CN); SUN, Wei, 610100 Chengdu (CN); KUANG, Bo, 610100 Chengdu (CN)
(74) Representative: Office Kirkpatrick

(56) References cited:
- CN-A- 102 659 314
- US-A- 5 270 269
- US-A1- 2007 032 367

## Description

### Technical Field

The present invention relates to a crystal glass, particularly a crystal glass with high weather resistance, the refractive index being 1.52-1.57 and Abbe number being 50-60.

### Background

The crystal glass has good transparency and higher density and is often used for manufacturing top-grade tableware and artwork. As specified in EU standards on crystal glass, the glass can be called as crystal glass if the percentage of one or all of PbO, BaO, ZnO, and K₂O by weight is more than 10%, the refractive index is more than 1.52, and the density is more than 2.45.

The crystal glass tableware containing lead oxide will release a lot of lead ions which have serious injury to human body under the action of acid salt solution, such as wine. Meanwhile, the crystal glass containing lead oxide will pollute the surroundings in the production process. Therefore, cancellation of lead oxide in the crystal glass becomes the development direction of crystal glass.

CN102659314A has disclosed a glass which replaces PbO with 10-18% of BaO, and this manner also has some problems. On one hand, barium is one of heavy metals, which is easily dissolved out by acid solution and will have toxic effects in case of excessive absorption by human body; on the other hand, addition of BaO to glass will cause reduction of chemical stability of glass, particularly weather resistance.

The crystal glass has higher weather resistance requirements when used as ornamental glass, for example, crystal chandelier and artwork, which are often made of crystal glass, are generally used for several decades and even hundreds of years. In the long-term use process, the moisture in the air will react with the glass surface, and then form a white substance layer on the surface for long-term accumulation. If the glass with poor weather resistance is used for decorations, the service time is short, and even after several years, the surface of the glass will be eroded slowly, and the translucent visual effect of the glass products will be reduced. If the glass with poor weather resistance is used for making crystal lamps, crystal lamps will be seemed foggy after several years, and the due translucent visual effect will be lost.

The weather resistance of glass is tested according to the following methods: conduct turbidity test for the polished glass sample by using spherical turbidimeter, then put in the environment testing box with saturated water and vapor at an alternating temperature of 40-50°C after recording, and finally test the turbidity value added of the glass surface with a turbidimeter. The less the value added is, the better the weather resistance is. For common optical glass, the testing time is 30 hours. For glass with good weather resistance, the testing time is required to be 400 hours and longer. The turbidity difference is represented as ΔH; the greater ΔH is, the worse the weather resistance is. Generally speaking, after testing for 400 hours, the turbidity value added of the testing surface is within 0.5%, and the weather resistance of glass can meet long-time service requirements.

The glass with good weather resistance usually contains more SiO₂, and is mixed with a certain amount of B₂O₃, some intermediate oxides such as Al₂O₃, TiO₂, and little alkali metal to reduce the high-temperature viscosity. As shown in Table 1 and Tale 2:

**Table 1 Components and Weather Resistance of Several Contrastive Glasses**

| Oxide | Refractive index | Density | SiO ₂ | B₂ O₃ | Al₂ O₃ | Ti O₂ | Zn O | Ba O | Ca O | Na₂ O | K₂ O | Turbidity added |
|---|---|---|---|---|---|---|---|---|---|---|---|---|
| Contrastive glass 1 | 1.504 | 2.50 | 65. 0 | 8.3 | 4.1 | 4.3 | 5.5 | 0.0 | 0.0 | 6.7 | 6.6 | 0.2% |
| Contrastive glass 2 | 1.473 | 2.25 | 80. 0 | 13. 0 | 2.3 | 0.0 | 0.0 | 0.0 | 0.0 | 3.7 | 0.6 | 0.2% |
| Contrastive glass 3 | 1.569 | 2.83 | 55. 5 | 6.6 | 0.5 | 2.1 | 4.0 | 11. 5 | 9.5 | 5.6 | 5.1 | 6.3% |

Remark 1: The testing time for the turbidity variation is 400 hours.
Remark 2: The component content is percentage by weight.

**Table 2 High-temperature Viscosity of Several Contrastive Glasses**

| Temperature/Viscosity | 1200°C | 1300°C | 1400°C | Remarks |
|---|---|---|---|---|
| Contrastive glass 1 | 1290 | 548 | 268 | The clarification temperature is about 1500°C |
| Contrastive glass 2 | 8602 | 3411 | 1454 | The clarification temperature is about 1600°C |
| Contrastive glass 3 | 181 | 70 | 32.5 | The clarification temperature is about 1420°C |

Remark 1: The viscosity unit is daps.

As shown in Tables 1 and 2, the content of alkali metal oxide is reduced through increasing the content of SiO₂ in contrastive glasses 1, 2, so as to realize good weather resistance. However, the content of SiO₂ is higher, so the refractive index and/or density of glass cannot meet crystal glass standards on one hand. On the other hand, qualified products can be obtained by using a higher melting temperature in production because the high-temperature viscosity is higher. The refractive index and density of the contrastive glass 3 reach the crystal glass standards through adding a lot of alkaline earth metal oxide such as BaO, CaO, but for 400-hour weather resistance, the turbidity is increased to 6.3%, and the turbidity is poor.

The glass used for imaging has very strict requirements to the extent of bubble, for example, the imaging optical element usually requires an extent of bubble of A0. The bubble quality standards of optical glass GB/T7962.8-2010 specify that, in 100cm³, the total sectional area of the bubble with the diameter of more than 0.05mm is 0.03-0.1mm². The decorative glass and its tableware glass have lower requirements for the extent of bubble, but bubbles are commonly required not to be seen by naked eyes.

Bubbles are eliminated generally by high temperature clarification in the process of producing glass by using platinum vessels. The process temperature of clarification is related to the high-temperature viscosity; the more the high-temperature viscosity of glass is, the higher the process temperature of clarification is. As described in the above contrastive glass 2, the high-temperature viscosity is very high, and the clarification temperature in the production process reaches 1600 °C. High clarification temperature is not conducive to glass production, and mainly embodied in the following four aspects: 1) The service life of the furnace body and its platinum crucible will be reduced. Experience has showed that, the furnace body is at the working temperature of 1600°C for a long term, and the service life of the furnace body and platinum crucible are reduced by about 60% in comparison with the working temperature of 1400°C; 2) Higher energy consumption brings greater environmental load. The furnace body is at the working temperature of 1600°C, and in comparison with the working temperature of 1400°C, the energy consumption increases about 150%; 3) The glass will accelerate reaction with platinum under the action of high temperature, to generate platinum inclusions easily in the finished glass, reduce the product quality, and increase platinum loss; 4) High temperature melting will reduce the transmittance of glass.

To reduce the high-temperature viscosity of glass, 3-10% of fluoride is added in CN200710051220.7, thus reducing the high-temperature viscosity of glass, but the fluoride is volatile in the production process, which will impair production personnel's health and increase environmental loads. Meanwhile, it is more difficult to control the index consistency such as the refractive index of the product for volatilization of fluoride.

Therefore, the development of crystal glass research is to design a glass to meet crystal glass standards, not contain toxic substances such as PbO, BaO, have better weather resistance and lower high-temperature viscosity and facilitate low-cost production.

### Summary

A technical problem to be solved by the present invention is to provide a crystal glass with excellent weather resistance, the refractive index ranging from 1.52 to 1.57 and the Abbe number ranging from 50 to 60.

To solve the technical problem, the present invention provides a crystal glass, comprising 50-65wt% of SiO₂, 4.1-16wt% of B₂O₃, 8-20wt% of ZnO, 1-5wt% of TiO₂, 1-5wt% of Al₂O₃, 1-5wt% of ZrO₂, 6-12wt% of Na₂O, 1-4wt% of K₂O, and 1-4wt% of Li₂O.

Furthermore, the crystal glass comprises: 0-4% of CaO, 0-3% of SrO, 0-3% of MgO.

Furthermore, the total content of CaO+SrO+MgO is not more than 6%.

Furthermore, the crystal glass is characterized by 52-63% of SiO₂ and/or 5-15% of B₂O₃ and/or 9-18% of ZnO and/or 1.5-4.5% of TiO₂ and/or 1.5-4.5% of Al₂O₃ and/or 1.5-4.5% of ZrO₂ and/or 7-11% of Na₂O and/or 1.5-3% of K₂O and/or 1.5-3% of Li₂O.

Furthermore, the total content of Na₂O+K₂O+Li₂O is not more than 16%.

Furthermore, the total content of TiO₂+Al₂O₃+ZrO₂ is 4.5-10%.

Furthermore, the crystal glass does not comprise: BaO, Ta₂O₅, La₂O₃, Y₂O₃, WO₃, Nb₂O₅, Bi₂O₃ and fluoride.

Furthermore, the crystal glass further comprises: 0-1% of Sb₂O₃, 0-1% of Er₂O₃, 0-1% of Nd₂O₅.

Furthermore, the said glass is subjected to test for 400 hours according to rated conditions, and the turbidity difference ΔH is not more than 0.5%.

Furthermore, the viscosity of the said glass is not more than 300daps at 1300°C, and not more than 200daps at 1400°C.

Furthermore, the density of the said glass is more than 2.45 g/cm³.

Furthermore, for 5mm-thick polished samples of the said glass, the spectrum transmittance of 400nm-450nm (but not including 450nm) is more than 89%; the spectrum transmittance of 450nm-700nm is more than 90%.

The advantageous effects of the present invention: to enable the glass provided by the present invention to meet the refractive index and density standards of crystal glass through reasonable arrangement of component contents, and meanwhile the crystal glass is featured by good transmittance, excellent weather resistance, low high-temperature viscosity and low production difficulty. The present invention is applied to top-grade artworks, to-grade tableware, imaging lens, etc.

### Detailed Description

Each component of the glass provided by the present invention is described hereunder, and the content thereof is represented by wt% unless otherwise stated.

SiO₂ is the network former of glass, and the framework for forming the glass. In the glass provided by the prevent invention system, when the content of SiO₂ is higher than 65%, the high-temperature viscosity of glass will be increased, and the refractive index of glass will be reduced; when the content of SiO₂ is lower than 50%, the weather resistance will be reduced. Therefore, to maintain better weather resistance, obtain lower high-temperature viscosity and reach refractive index standards of crystal glass, the content of SiO₂ is confined to 50-65%, preferably 52-63%.

B₂O₃ is also one of glass formers, and meanwhile also a good cosolvent. In the glass provided by the prevent invention system, addition of B₂O₃ will remarkably promote the solubility property of glass raw material. According to the inventor's concentration on studies and a lot of tests, in the glass of the system, the content of B₂O₃ is one of the key factors for determining the weather resistance of glass in the system, because, if the content of B³⁺ in the glass is less, the ion B³⁺ is in the tetrahedron [BO₄], and broken bonds generated by alkali metal ions are connected again, thus promoting the weather resistance. With content increase of B₂O₃, the structure of the ion B³⁺ is transformed toward the triangle [BO₃], thus reducing the weather resistance instead. Through multiple tests by the inventor, if the addition of B₂O₃ is lower than 4.1%, on one hand, the solubilization effect is not obvious, and on the other hand, the quantity of the tetrahedron [BO₄] in the glass network is less, and cannot effectively connect broken bonds in the glass together, thus the weather resistance is reduced; if the addition of B₂O₃ is higher than 16%, the triangle [BO₃] in the glass network will be increased, thus reducing the weather resistance. Accordingly, the content of B₂O₃ is confined to 4.1-16%, preferably 5-15%.

Adding appropriate amount of ZnO in the glass can improve the refractive index and density of glass, while also reducing the high-temperature viscosity and improving the weather resistance of glass. Nevertheless, if excessive ZnO is added, the crystallization resistance will be reduced, and the high-temperature viscosity will be small; under certain cooling conditions, the time for converting glass fluid into solid gets longer, which brings difficulty to glass forming. In this system glass, in case the content of ZnO is lower than 8%, the refractive index and density of glass cannot meet the design requirements, and the high-temperature viscosity is high, so it is unfavorable for low-temperature clarification; in case its content is higher than 20%, the devitrification resistance of glass will be reduced, and high-temperature viscosity cannot meet the design requirements. Therefore, the content of ZnO is confined to 8-20%, preferably 9-18%.

TiO₂ belongs to a high-refractivity oxide, which can significantly enhance the refractive index and weather resistance when added in glass. However, in case excessive TiO2 is added in glass, the transmittance of glass can be damaged, and thus the content of TiO2 is confined to 1-5%, preferably 1.5-4.5%.

ZrO₂ belongs to high-refractivity oxide, which can significantly enhance the refractive index and weather resistance when added in glass. Nonetheless, ZrO₂ belongs to an indissolvable oxide, which can significantly improve the high-temperature viscosity and bring risks for producing calculi and devitrification when excessively added in glass. Thus, the content of ZrO₂ is confined to 1-5%, preferably 1.5-4.5%.

Al₂O₃ can be added into the glass to improve the weather resistance; if its content is lower than 1%, the weather resistance cannot be improved significantly. In case its content is higher than 5%, risks of dissolution difficulty, devitrification property degradation and weather resistance reduction will be caused. Therefore, its content in this system glass is confined to 1-5%, preferably 1.5-4.5%.

Furthermore, TiO₂, ZrO₂ and Al₂O₃ are all belong to intermediate oxides, and can enter a glass network to improve the weather resistance of glass. However, on the one hand, these oxides all belong to indissolvable oxides and their excessive total additions will improve the high-temperature viscosity of glass; on the other hand, from experiments it is found that the weather resistance will be lowered if the total amount of TiO₂, ZrO₂ and Al₂O₃ exceeds 10%. For this reason, from multiple tests by the inventor it is found that the glass has better weather resistance as well as ideal high-temperature viscosity when the total content of TiO₂+Al₂O₃+ZrO₂ is between 4.5 and 10%.

CaO, SrO and MgO, all belonging to alkaline earth metal oxide, can be added in the glass to improve the refractive index and balance glass components to make the glass become stable. As for crystal glass provided by the present invention, weather resistance is the most critical index when the refractive index meets the requirements. Through multiple tests by the inventor, it is found that the alkaline earth metal oxide has negative influences on the weather resistance of glass. However, to reach the refractive index and Abbe number required by the crystal glass and take the alkaline earth metal oxide good for improving the stability of glass into account, the alkaline earth metal oxide is also an optional additive. As for the above three oxides, CaO, with minimum damage to weather resistance, can be added in the glass to improve refractive index, so that its addition is confined to 0-4%, preferably not added. For SrO has the effect similar to CaO and can partially replace CaO, the content of SrO is confined to 0-3%, preferably not added. The content of MgO is 0-3%, preferably not added. Massive researches show that the glass has the best property when the total content of CaO+SrO+MgO does not exceed 6%.

According to the glass forming law theory, the destructive effects of alkali metal ions to the weather resistance of glass can be arranged according to the capacities of K₂O>Na₂O>Li₂O. For instance, in SiO₂-R₂O bi-component glass, the destruction of K₂O to the weather resistance of glass is 100 times greater than that of Li₂O, and 3 times than Na₂O. Nevertheless, the above laws are results obtained by tests on the SiO₂-R₂O bi-component glass, while generally practical glass is multi-component; in a multi-component glass system, multiple alkaline metals are added into the glass components to produce complicate "synergistic effect", and the glass performances will not be changed linearly according to the addition of single alkaline metal, such as the weather resistance of glass. The mixture of several alkali metal oxides added into the glass components is better for improving the weather resistance than single alkali metal oxide, but with a certain limit, neither the more, the better, nor the less, the better. As a consequence, the addition of alkali metal and its matching range need to be tested and adjusted according to glass compositions, with the need of the best alkaline metal combination range. As a result, through the inventor's test, Na₂O, K₂O and Li₂O are confirmed as necessary components of the crystal glass provided by the present invention, and when its content meets the following scope, better weather resistance and ideal high-temperature viscosity can be reached.

The capacity of Li₂O to destroy the glass network is the strongest, and the capacity to lower the high-temperature viscosity of glass is the most significant. In case the content of Li₂O is lower than 1%, the effect to reduce the high-temperature viscosity is not significant, and meanwhile its field intensity is greater, and the clustering ability to surrounding ions is the strongest. While when the addition of Li₂O is higher than 4%, the devitrification resistance of glass can be lowered, while bringing the risk for producing platinum inclusions. Thus, the content of Li₂O is confined to 1-4%, preferably 1.5-3%.

Owing to rather great destruction to the weather resistance of glass, the content of K₂O cannot be higher than 4%. However, to realize "mixed alkali effect" and enhance the weather resistance of glass, the content of K₂O cannot be lower than 1%, preferably 1.5-3%.

In case the content of Na₂O is lower than 6%, the high-temperature viscosity of glass cannot meet the design objects. If its content is higher than 12%, the weather resistance of glass will be decreased significantly. Thus, its content is confined to 6-12%. Under this content limitation, Na₂O can realize the significant "mixed alkali effect" and enhance the weather resistance of glass, and its content is preferably 7-11%.

Furthermore, the common points of Na₂O, K₂O and Li₂O that all belong to alkali metal oxides lie in being capable of destroying an Si-O key in the glass, breaking the glass network, reducing the high-temperature viscosity of glass, but excessive addition will significantly damage the weather resistance of glass. Thus, in the crystal glass provided by the present invention, the total content of Na₂O+K₂O+Li₂O is confined to not more than 16%, preferably not more than 15%.

Sb₂O₃ is a clarifying agent which is easier to eliminate bubbles when added in the glass. Its content in the glass provided by the present invention is confined to 0-1%, preferably 0-0.8%.

Er₂O₃ and Nd₂O₅ that belong to rare earth oxides are added to the glass to play the same role as a decolorising agent, and their excessive additions will result in serious coloring of glass. The contents of Er₂O₃ and Nd₂O₅ in the glass provided by the present invention are respectively confined to 0-1%, preferably 0-0.3%.

In the following paragraphs, the performance of optical glass provided in this invention will be described:

The refractive index and Abbe number are measured as per *Test Methods of Colorless Optical Glass (GB*/*T 7962.1-2010): Refractive Index and Coefficient of Dispersion.*

The high-temperature viscosity is measured by a high-temperature viscometer, with the numerical value unit of Dps; the smaller the numerical value is, the lower the viscosity is.

The density is tested as per the *Method for Testing the Density of Colorless Optical Glass* (GB/T 7962.20-2010).

The spectrum transmittance of a polished sample that is 5mm thick is tested by a spectrophotometer.

The weather resistance of glass is tested according to the following methods: conduct turbidity test for the polished glass sample by using spherical turbidimeter, then put in the environment testing box with saturated water and vapor at an alternating temperature of 40-50°C after recording, testing for 400 hours, and finally test the turbidity of the sample tested by spherical turbidimeter, with the turbidity difference represented by ΔH.

Through tests, the optical glass provided by the present invention has the following performances: the refractive index is between 1.52 and 1.57, and the Abbe number is between 50 and 60. According to the conditions specified in the foregoing paragraphs, when the weather resistance is tested for 400h, the turbidity increasing value ΔH does not exceed 0.5%; the viscosity does not exceed 300daps at 1300°C, and not exceed 200daps at 1400°C; the density is greater than 2.45g/cm³; the spectrum transmittance of the polished sample that is 5mm thick is greater than 89% at 400nm, and also greater than 90% at 450nm, 500nm, 600nm and 700nm.

### Embodiments

To further understand the technical scheme of the present invention, embodiments of optical glass provided in this invention are described as below. What shall be noted is that these embodiments do not limit the scope of this invention.

The optical glasses (Embodiments 1-15) shown in Tables 3 and 4 are formed by weighting based on the proportions of each embodiment in Tables 3 and 4, mixing the ordinary raw materials for optical glass (such as oxide, hydroxide, carbonate and nitrate), placing the mixed raw materials in a platinum crucible, melting for 2.5-4h at 1320-1420°C, obtaining homogeneous melted glass without bubbles and undissolved substances after clarification, stirring and homogenization, shaping the molten glass in a mould and performing annealing.

In the Embodiments 1-15 provided by the present invention, the refractive index is represented by nd, the Abbe number by vd, the density by p, the content of TiO₂+Al₂O₃+ZrO₂ by A, the content of Na₂O+K₂O+Li₂O by B, the content of CaO+SrO+MgO by C, the 400-hour weather resistance turbidity increasing value represented by ΔH, the viscosity at 1300°C by D1 (the unit is dps), the viscosity at 1400°C by D2 (the unit is dps), and the transmittances of the 5mm polished sample at 400nm, 450nm, 500nm, 600nm and 700nm respectively by E1, E2, E3, E4 and E5. All data are represented in Tables 3 and 4, with all compositions represented by wt%.

**Table 3**

| Composition | Embodiments | | | | | | | | | |
|---|---|---|---|---|---|---|---|---|---|---|
| | 1 | 2 | 3 | 4 | 5 | 6 | 7 | 8 | 9 | 10 |
| SiO2 | 57.4 | 57.6 | 58.1 | 56.0 | 61.1 | 60.0 | 62.6 | 55.0 | 52.0 | 53.9 |
| B2O3 | 4.2 | 4.5 | 4.2 | 6.2 | 15.2 | 8.0 | 12.5 | 11.2 | 12.0 | 12.0 |
| ZnO | 11.7 | 11.4 | 11.0 | 11.9 | 8.1 | 13.8 | 8.4 | 11.0 | 15.1 | 13.0 |
| TiO2 | 1.8 | 1.4 | 1.6 | 1.4 | 1.0 | 3.0 | 0.8 | 2.8 | 1.7 | 1.0 |
| Al2O3 | 2.6 | 2.9 | 3.2 | 2.8 | 2.4 | 3.0 | 2.0 | 3.0 | 2.0 | 3.0 |
| ZrO₂ | 3.2 | 2.3 | 2.0 | 2.6 | 1.5 | 3.0 | 2.0 | 3.0 | 2.0 | 2.0 |
| CaO | 3.9 | 4.0 | 3.8 | 3.9 | 0.0 | 0.0 | 0.0 | 3.9 | 3.8 | 3.8 |
| SrO | 0.0 | 0.0 | 0.0 | 0.0 | 0.0 | 0.0 | 0.0 | 0.0 | 0.0 | 2.0 |
| MgO | 0.0 | 0.0 | 0.0 | 0.0 | 0.0 | 0.0 | 0.0 | 0.0 | 0.0 | 0.0 |
| Na2O | 11.5 | 11.0 | 10.3 | 11.3 | 7.6 | 7.0 | 7.6 | 7.0 | 8.0 | 6.2 |
| K2O | 1.9 | 2.9 | 3.8 | 2.0 | 2.1 | 1.5 | 3.1 | 2.0 | 2.0 | 2.0 |
| Li₂O | 1.7 | 1.7 | 1.8 | 1.8 | 0.9 | 0.6 | 0.9 | 1.0 | 1.3 | 1.0 |
| Sb₂O₃ | 0.1 | 0.3 | 0.2 | 0.1 | 0.1 | 0.1 | 0.1 | 0.1 | 0.1 | 0.1 |
| Total (%) | 100.0 | 100.0 | 100.0 | 100.0 | 100.0 | 100.0 | 100.0 | 100.0 | 100.0 | 100.0 |
| A | 7.6 | 6.6 | 6.8 | 6.8 | 4.9 | 9.0 | 4.8 | 8.8 | 5.7 | 6.0 |
| B | 15.1 | 15.6 | 15.9 | 15.1 | 10.6 | 9.1 | 11.6 | 10.0 | 11.3 | 9.2 |
| C | 3.9 | 4.0 | 3.8 | 3.9 | 0.0 | 0.0 | 0.0 | 3.9 | 3.8 | 5.8 |
| Nd | 1.559 | 1.554 | 1.555 | 1.557 | 1.521 | 1.556 | 1.523 | 1.567 | 1.566 | 1.568 |
| Vd | 54.5 | 54.1 | 54.3 | 54.1 | 58.2 | 54.4 | 58.9 | 56.1 | 55.3 | 54.7 |
| ρ (g/cm³) | 2.72 | 2.70 | 2.71 | 2.72 | 2.51 | 2.52 | 2.54 | 2.70 | 2.72 | 2.71 |
| ΔH (%) | 0.30 | 0.25 | 0.30 | 0.25 | 0.1 | 0.1 | 0.1 | 0.3 | 0.5 | 0.5 |
| D1 | 72.9 | 68.4 | 70.1 | 64.1 | 250.1 | 210.0 | 185.0 | 60.0 | 75.1 | 48.0 |
| D2 | 36.4 | 35.4 | 36.1 | 32.5 | 120.5 | 100.0 | 91.0 | 30.0 | 40.3 | 28.5 |
| E1 (%) | 90.5 | 90.6 | 90.4 | 90.3 | 90.8 | 90.2 | 90.1 | 90.0 | 90.1 | 90.0 |
| E2 (%) | 90.8 | 90.7 | 90.7 | 90.8 | 90.9 | 90.8 | 90.6 | 90.4 | 90.3 | 90.2 |
| E3 (%) | 90.9 | 91.0 | 91.0 | 91.1 | 91.2 | 91.1 | 91.0 | 91.0 | 91.0 | 91.1 |
| E4 (%) | 91.1 | 91.1 | 91.2 | 91.2 | 91.4 | 91.2 | 91.1 | 91.1 | 91.2 | 91.3 |
| E5 (%) | 91.4 | 91.5 | 91.6 | 91.6 | 91.6 | 91.5 | 91.4 | 91.4 | 91.4 | 91.4 |

**Table 4**

| Composition | Embodiment | | | | |
|---|---|---|---|---|---|
| | 11 | 12 | 13 | 14 | 15 |
| SiO2 | 57.9 | 56.0 | 57.0 | 58.0 | 59.0 |
| B2O3 | 4.1 | 7.7 | 4.6 | 6.2 | 6.0 |
| ZnO | 11.8 | 12.5 | 11.8 | 11.0 | 10.9 |
| TiO2 | 1.4 | 2.0 | 1.8 | 1.3 | 1.5 |
| Al2O3 | 2.7 | 2.5 | 2.6 | 2.8 | 2.4 |
| ZrO2 | 2.6 | 3.0 | 3.2 | 3.2 | 3.0 |
| CaO | 3.6 | 3.0 | 3.6 | 3.1 | 3.0 |
| SrO | 0.0 | 0.0 | 0.0 | 0.0 | 0.0 |
| MgO | 0.0 | 1.0 | 0.0 | 0.0 | 0.0 |
| Na2O | 9.8 | 8.6 | 11.5 | 10.7 | 11.0 |
| K2O | 3.9 | 2.1 | 1.9 | 1.6 | 2.0 |
| Li2O | 1.8 | 1.2 | 1.6 | 1.5 | 1.1 |
| Sb2O3 | 0.4 | 0.4 | 0.4 | 0.6 | 0.1 |
| Total (%) | 100.0 | 100.0 | 100.0 | 100.0 | 100.0 |
| A | 6.7 | 7.5 | 7.6 | 7.3 | 6.9 |
| B | 15.5 | 11.9 | 15.0 | 13.8 | 14.1 |
| C | 3.6 | 4.0 | 3.6 | 3.1 | 3.0 |
| Nd | 1.553 | 1.556 | 1.558 | 1.557 | 1.556 |
| Vd | 55.4 | 54.8 | 54.6 | 55.2 | 55 |
| ρ (g/cm³) | 2.69 | 2.70 | 2.71 | 2.69 | 2.70 |
| ΔH (%) | 0.3 | 0.3 | 0.3 | 0.3 | 0.3 |
| D1 | 64.2 | 81.2 | 68.1 | 75.6 | 80.1 |
| D2 | 35.1 | 41.5 | 35.2 | 41.2 | 51.5 |
| E1 (%) | 90.5 | 90.4 | 90.5 | 90.4 | 90.4 |
| E2 (%) | 90.7 | 90.7 | 90.8 | 90.7 | 90.8 |
| E3 (%) | 90.9 | 90.8 | 90.9 | 90.8 | 91.0 |
| E4 (%) | 91.1 | 91.1 | 91.0 | 90.9 | 91.1 |
| E5 (%) | 91.4 | 91.4 | 91.4 | 91.4 | 91.4 |

## Claims

1. A crystal glass, comprising 50-65wt% of SiO₂, 4.1-16wt% of B₂O₃, 8-20wt% ofZnO, 1-5wt% of TiO₂, 1-5wt% of Al₂O₃, 1-5wt% of ZrO₂, 6-12wt% of Na₂O, 1-4wt% of K₂O, and 1-4wt% of Li₂O.

2. The crystal glass according to claim 1, further comprising: 0-4% of CaO, 0-3% of SrO, and 0-3% of MgO.

3. The crystal glass according to claim 2, wherein the total content of CaO+SrO+MgO is not more than 6%.

4. The crystal glass according to claim 1, **characterized by** comprising 52-63% of SiO₂ and/or 5-15% of B₂O₃ and/or 9-18% of ZnO and/or 1.5-4.5% of TiO₂ and/or 1.5-4.5% of Al₂O₃ and/or 1.5-4.5% of ZrO₂ and/or 7-11% of Na₂O and/or 1.5-3% of K₂O and/or 1.5-3% of Li₂O.

5. The crystal glass according to claim 1, wherein the total content of Na₂O+K₂O+Li₂O is not more than 16%.

6. The crystal glass according to claim 1, wherein the total content of TiO₂+Al₂O₃+ZrO₂ is 4.5-10%.

7. The crystal glass according to claim 1, not comprising: BaO, Ta₂O₅, La₂O₃, Y₂O₃, WO₃, Nb₂O₅, Bi₂O₃ and fluoride.

8. The crystal glass according to claim 1, further comprising 0-1% of Sb₂O₃, 0-1% of Er₂O₃ and 0-1% of Nd₂O₅.

9. The crystal glass according to claim 1, wherein the weather resistance of the said glass is subjected to test for 400 hours according to rated conditions, and the turbidity difference ΔH is not more than 0.5%.

10. The crystal glass according to claim 1, wherein the viscosity of the said glass is not more than 300daps at 1300°C, and not more than 200daps at 1400°C.

11. The crystal glass according to claim 1, wherein the density of the said glass is more than 2.45 g/cm³.

12. The crystal glass according to claim 1, wherein, for 5mm-thick polished samples of the said glass, the spectrum transmittance of 400nm-450nm, but not including 450nm, is more than 89%; the spectrum transmittance of 450nm-700nm is more than 90%.

## Patentansprüche

1. Kristallglas, das 50 bis 65 Gew.-% SiO₂, 4,1 bis 16 Gew.-% B₂O₃, 8 bis 20 Gew.-% ZnO, 1 bis 5 Gew.-% TiO₂, 1 bis 5 Gew.-% Al₂O₃, 1 bis 5 Gew.-% ZrO₂, 6 bis 12 Gew.-% Na₂O, 1 bis 4 Gew.-% K₂O und 1 bis 4 Gew.-% Li₂O umfasst.

2. Kristallglas nach Anspruch 1, das ferner umfasst: 0 bis 4 % CaO, 0 bis 3 % SrO und 0 bis 3 % MgO.

3. Kristallglas nach Anspruch 2, wobei der Gesamtgehalt von CaO + SrO + MgO nicht mehr als 6 % beträgt.

4. Kristallglas nach Anspruch 1, **dadurch gekennzeichnet, dass** es 52 bis 63 % SiO₂ und/oder 5 bis 15 % B₂O₃ und/oder 9 bis 18 % ZnO und/oder 1,5 bis 4,5 % TiO₂ und/oder 1,5 bis 4,5 % Al₂O₃ und/oder 1,5 bis 4,5 % ZrO₂ und/oder 7 bis 11 % Na₂O und/oder 1,5 bis 3 % K₂O und/oder 1,5 bis 3 % Li₂O umfasst.

5. Kristallglas nach Anspruch 1, wobei der Gesamtgehalt von Na₂O + K₂O + Li₂O nicht mehr als 16 % beträgt.

6. Kristallglas nach Anspruch 1, wobei der Gesamtgehalt von TiO₂ + Al₂O₃ + ZrO₂ 4,5 bis 10 % beträgt.

7. Kristallglas nach Anspruch 1, das nicht umfasst: BaO, Ta₂O₅, La₂O₃, Y₂O₃, WO₃, Nb₂O₅, Bi₂O₃ und Fluorid.

8. Kristallglas nach Anspruch 1, das ferner 0 bis 1 % Sb₂O₃, 0 bis 1% Er₂O₃ und 0 bis 1 % Nd₂O₅ umfasst.

9. Kristallglas nach Anspruch 1, wobei die Wetterbeständigkeit des Glases 400 Stunden unter Nennbedingungen getestet wird und der Trübungsunterschied ΔH nicht mehr als 0,5 % beträgt.

10. Kristallglas nach Anspruch 1, wobei die Viskosität des Glases bei 1300 °C nicht mehr als 300 daps und bei 1400 °C nicht mehr als 200 daps beträgt.

11. Kristallglas nach Anspruch 1, wobei die Dichte des Glases mehr als 2,45 g/cm³ beträgt.

12. Kristallglas nach Anspruch 1, wobei die spektrale Transmittanz von 400 nm bis 450 nm, wobei 450 nm jedoch nicht miteingeschlossen ist, bei 5 mm dicken polierten Proben des Glases mehr als 89 % beträgt; die spektrale Transmittanz von 450 nm bis 700 nm mehr als 90 % beträgt.

## Revendications

1. Verre cristal, comprenant 50-65 % en poids de SiO₂, 4, 1-16 % en poids de B₂O₃, 8-20 % en poids de ZnO, 1-5 % en poids de TiO₂, 1-5 % en poids d'Al₂O₃, 1-5 % en poids de ZrO₂, 6-12 % en poids de Na₂O, 1-4 % en poids de K₂O et 1-4 % de Li₂O.

2. Verre cristal selon la revendication 1, comprenant en outre : 0-4 % de CaO, 0-3 % de SrO et 0-3 % de MgO.

3. Verre cristal selon la revendication 2, dans lequel la teneur totale de CaO+SrO-MgO n'est pas supérieure à 6 %.

4. Verre cristal selon la revendication 1, **caractérisé par le fait qu'**il comprend 52-63 % de SiO₂ et/ou 5-15 % de B₂O₃ et/ou 9-18 % de ZnO et/ou 1,5-4,5 % de TiO₂ et/ou 1, 5-4, 5 % d'Al₂O₃ et/ou 1, 5-4, 5 % de ZrO₂ et/ou 7-11 % de Na₂O et/ou 1,5-3 % de K₂O et/ou 1,5-3 % de Li₃O.

5. Verre cristal selon la revendication 1, dans lequel la teneur totale de Na₂O-K₃O+Li₂O n'est pas supérieure à 16 %.

6. Verre cristal selon la revendication 1, dans lequel la teneur totale de TiO₂-Al₂O₃+ZrO₂ est 4, 5-10 %.

7. Verre cristal selon la revendication 1, ne comprenant pas : BaO, Ta₂O₅, La₂O₃, Y₂O₃, WO₃, Nb₂O₅, Bi₂O₃ et fluorure.

8. Verre cristal selon la revendication 1, comprenant en outre 0-1 % de Sb₂O₃, 0-1 % d'Er₂O₃ et 0-1 % de Nd₂O₅.

9. Verre cristal selon la revendication 1, dans lequel la résistance aux intempéries dudit verre est soumise à un test pendant 400 heures selon des conditions nominales, et la différence de turbidité ΔH n'est pas supérieure à 0,5 %.

10. Verre cristal selon la revendication 1, dans lequel la viscosité dudit verre n'est pas supérieure à 300 daps à 1300°C, et non supérieure à 200 daps à 1400°C.

11. Verre cristal selon la revendication 1, dans lequel la masse volumique dudit verre est supérieure à 2,45 g/cm³.

12. Verre cristal selon la revendication 1, dans lequel, pour des échantillons polis de 5 mm d'épaisseur dudit verre, la transmittance de spectre de 400 nm-450 nm, mais n'incluant pas 450 nm, est supérieure à 89 % ; la transmittance de spectre de 450 nm-700 nm est supérieure à 90 %.
